# EUROPEAN PATENT SPECIFICATION

(11) **EP 4 274 983 B1**
(45) Date of publication and mention of the grant of the patent: **15.04.2026**
(21) Application number: 22737101.0
(22) Date of filing: 06.01.2022
(51) Int. Cl.: F17C 1/00, F17C 1/12, F17C 7/02, F17C 7/04, F17C 13/02, F17C 13/04

(54) **CRYO-COMPRESSED HYDROGEN STORAGE MULTI-TANK SYSTEMS AND THEIR THERMAL MANAGEMENT**
KRYOKOMPRIMIERTE WASSERSTOFFSPEICHER-MEHRTANKSYSTEME UND DEREN WÄRMEVERWALTUNG
SYSTÈMES MULTI-RÉSERVOIRS DE STOCKAGE D'HYDROGÈNE CRYO-COMPRIMÉ ET LEUR GESTION THERMIQUE

(30) Priority: 06.01.2021 US 202163134455 P
(43) Date of publication of application: 15.11.2023
(73) Proprietor: Verne Inc., San Francisco, CA 94107 (US)
(72) Inventor: MCKLVEEN, Edward J., San Francisco, California 94107 (US); JARAMILLO, David E., San Francisco, California 94107 (US); ROY, Anubhav, San Francisco, California 94107 (US); MORENO-BLANCO, Julio, San Francisco, California 94107 (US)
(74) Representative: Murgitroyd & Company
(86) International application number: PCT/US2022/011434
(87) International publication number: WO 2022/150474

(56) References cited:
- US-A1- 2010 236 259
- US-A1- 2010 236 259
- US-A1- 2016 348 841
- US-A1- 2018 313 496
- US-A1- 2020 173 608
- US-A1- 2021 270 522
- US-B1- 6 354 088
- US-B2- 9 494 282
- US-B2- 9 784 410

## Description

### TECHNICAL FIELD

The present application relates to hydrogen storage. In particular, the present application relates to multi-tank cryo-compressed hydrogen storage systems optimized for heavy-duty transportation utilization, such as by fuel cell trucks and marine vessels.

### BACKGROUND

Decarbonization of the heavy-duty transportation industry, which is responsible for approximately 10% of global CO₂ emissions, is a daunting challenge that needs to be addressed in order to prevent catastrophic climate change outcomes. In contrast to the light-duty transportation sector, heavy-duty trucks, marine vessels, and aircraft demand remarkable power for long-route operations and consequently need to store magnitudes more fuel onboard. Thus, solutions that can mitigate CO₂ emissions resulting from fuel consumption in the light-duty transportation sector may not be effective in heavy-duty applications. For example, electrification with batteries is not sufficient in many operations, as the low energy-density limits the range of heavy-duty trucks and the long and demanding charge times constrains operational flexibility, and places substantial pressure on the local grid.

One known possible solution is natural gas as a heavy-duty fuel. Natural gas may be stored onboard as a liquid. While the energy density can meet demands across industries, and it can provide some CO₂ abatement, natural gas is ultimately not a low-emission fuel. It does not enable a scalable, full decarbonization of the industry. Natural gas is best thought of as a bridge fuel, buying more time to find the appropriate zero-emission fuel solution.

Liquid ammonia stored in low-pressure tanks is another possible fuel solution. Liquid ammonia exhibits a lower energy density than liquid natural gas, but is nonetheless considered by maritime industry, as an example. However, low carbon liquid ammonia has a high production cost, emits NOₓ contaminants, and introduces human health risks during accidental exposures. These factors may slow and constrain liquid ammonia as a low-carbon emission fuel.

A third possible solution is liquid hydrogen. Hydrogen can be a truly zero-emission fuel and the infrastructure exists today to initiate adoption by truck fleet and shipping operators. Liquid hydrogen can meet the energy demands of truck routes and many shipping segments, as its density is about 70 g/L (2.3 kWh/L) at 1 bar. One problem with liquid hydrogen as a fuel is its high cost in many parts of the world today. Transportation of goods is a low-margin industry and fuel cost is one of the most important financial metrics. Furthermore, distribution of liquid hydrogen from a centralized liquefaction facility will present serious logistical issues. For instance, many deep-sea ships could require 20 or more liquid hydrogen tanker trucks to be at the port at a precise moment for refueling. Compound this problem with simultaneous refueling of multiple deep-sea ships at a given port and port space becomes a seemingly intractable issue. The same scenario may also be problematic when refueling heavy-duty truck fleets and aircraft at an airport. A second problem with liquid hydrogen storage is that the resulting system density ends up being much lower than 70 g/L, a result of numerous factors, including the resulting internal density is actually lower than 70 g/L at storage conditions, volume space in the storage vessel is left vacant for liquid vapor, and due to the large ΔT between the environment and the liquid hydrogen, a thick insulation layer is required.

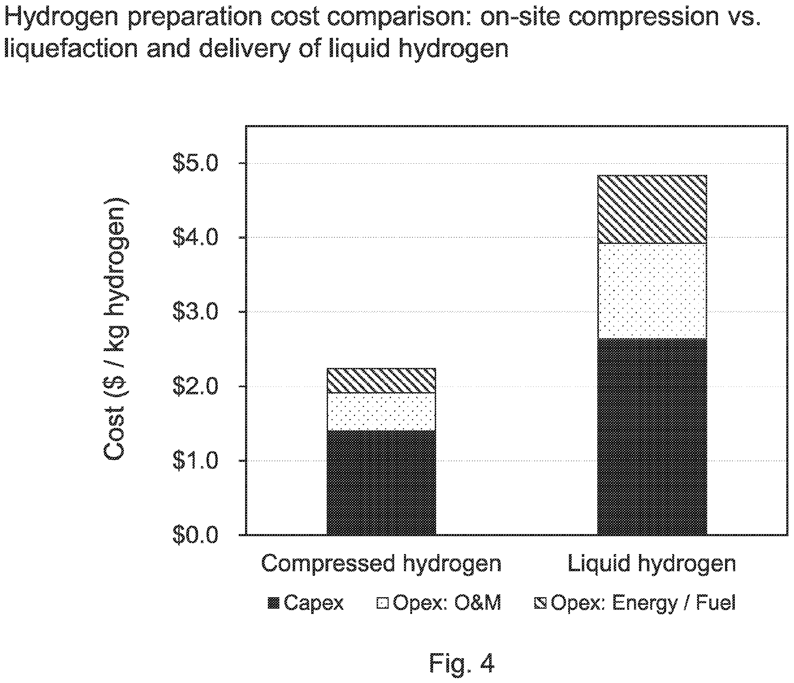

More recently, a fourth possible solution has been posited: compressed hydrogen. Various pilot projects have operated by storing hydrogen at 350 bar or 700 bar, both at room temperature. Fig. 4 shows that on-site hydrogen compression to about 350 bar is more than 50% cheaper than liquefaction and delivery to a refueling terminal, assuming the compressed hydrogen was produced on-site and incurs no delivery costs. While compressed hydrogen may serve some limited market segments, its poor volumetric density will prevent broader adoption. Compressed 350 bar hydrogen does not meet the energy demands of many truck and vessel routes. At a hydrogen system density of 20 g/L (0.7 kWh/L) and 4 wt % (1.3 kWh/kg), truck range is typically limited to below 300 miles (483km) and there may not be enough volume onboard most marine vessels to store sufficient hydrogen for regular operations. The challenge is exacerbated given that current options today call for simply stacking multiple single tanks into "pods", which creates significant void space, and overall can result in system densities that are even lower, 8 g/L (0.3 kWh/L). While 350 bar compressed hydrogen may be used by early adopters as demonstrations, its broad application is are limited. Compressed 700 bar storage vessels, with a system density of 25 g/L (0.8 kWh/L) and 6 wt % (2 kWh/kg), may be more suitable, but still faces similar challenges.

Another method of storing hydrogen is through cryo-compression and storage in suitable storage vessels, such as that described in the prior art, including U.S. Pat. No. 6708502B1. Cryo-compressed hydrogen (CCH₂) storage tanks have been developed for light-duty applications. While they have never reached commercial application, they have been demonstrated to work at lab and pilot scale, for example by BMW in their hydrogen 7 vehicle. In these examples, a single tank is used, with a storage volume of around 150 L, and the overall system size, with valves and other essential components, is around 200 L. Under these cryo-compressed hydrogen conditions, the tanks can store 5 - 10 kg of hydrogen and feature a system density of around 35 g/L (1.2 kWh/L) and 7 wt. % (2.3 kWh/kg). The single on-board tanks feature an in-tank heat exchanger for thermal management, as described in prior art, such as that in DE102014207300.

Simply combining multiple of these light-duty tanks to enable storage of more hydrogen would not be a suitable solution for most of heavy-duty transportation applications. There are numerous limitations to this approach and are all related to the arrangement of possible tanks, as well as their thermal management. Consider that for small and medium size ship types, hundreds to even thousands of these cryo-compressed tanks would be required. This introduces a large amount of void space between tanks. This greatly decreases the overall system volumetric density to the point where cryo-compression no longer makes sense, as precious cargo space would have to be converted to fuel storage space. Importantly, having at least one valve per tank will result in having hundreds to thousands of individual valves, which drives up the cost substantially. Notably, half of the storage system cost is the balance-of-systems, of which the primary contribution are valves. Additionally, for every valve required there is a higher probability of a leak point. In cryo-compressed hydrogen storage, many of these valves will need to be vacuum insulated, and consequently, any hydrogen leak will result in heat leaking into the system. Given the complexity in valves and potential leak points, hydrogen's high diffusivity and conductivity, this is a probable occurrence with current designs which can result in substantial venting and a loss of most of the fuel. This is unacceptable for maritime and aviation operations. Similarly, having an in-tank heat exchanger inside every tank is a prohibitively expensive thermal management operation for heavy-duty hydrogen storage quantities. Any components inside the storage vessel, such as a heat exchanger, will face harsh stresses. Typically heat exchangers are tubular structures that may vibrate substantially under on-road, or on-vehicle conditions. In order to avoid possible failure modes, such a cracking of the heat-exchanger, a notable amount of support material and thick connections are required. As described in prior art DE102015219984, one proposed solution includes having an additional hydrogen storage tank dedicated to storing hot hydrogen and using it for thermal management with the main hydrogen storage tank. While this may avoid using an in-tank heat exchanger, it still introduces complexity (an additional tank, valve, piping, e.g.) and adds more volume to the storage unit which does not contribute to the usable hydrogen capacity to power the on-board fuel cell or other hydrogen consuming device. Furthermore, the auxiliary tank needs to operate at a different pressure, and requires a distinct filling event from the main tank, which increases operational complexity. Prior art US11137116 similarly proposes using auxiliary tanks to help with thermal management. Overall, these strategies drive up cost while minimizing useful volume to store cryo-compressed hydrogen. A different multi-tank arrangement and its thermal management is thus required.

Another method of storing hydrogen is disclosed in US2018/313496.

In sum, there is no solution that meets all the desired criteria to capture the 4.3 gigaton CO₂ abatement opportunity of the heavy-duty transportation industry that exists today. Cryo-compressed hydrogen storage holds great promise but new designs for multi-tank systems and their efficient thermal management are required to drive down costs and increase performance.

### SUMMARY

According to one aspect there is provided a method of operating a cryo-compressed storage system according to claim 11. Optional features are recited in the dependent claims.

According to another aspect there is provided a storage system according to claim 1. Optional features are recited in the dependent claims.

### BRIEF DESCRIPTION OF THE DRAWINGS

Fig. 1 shows the market for hydrogen storage in the heavy-duty truck sector, highlighting its size and CO₂ abatement potential.
Fig. 2 shows the market for hydrogen storage in the maritime sector, highlighting its size and CO₂ abatement potential.
Fig. 3 shows examples of the volume available for fuel storage in representative vessels for four different maritime segments. For each vessel, the volume that could be occupied by hydrogen stored according to the present disclosure is shown. The amount of hydrogen stored is sufficient to power the given number of trips shown in parentheses for the given vessel.
Fig. 4 shows an example of the cost difference for liquefying and delivering liquid hydrogen versus compressing hydrogen at the refueling facility.
Fig. 5A shows a longitudinal cross-section view of an example of a fuel tank.
Fig. 5B shows a detailed view of a portion of the tank of Fig. 6A.
Fig. 6 shows a longitudinal cross-section view of the tank of Fig. 5A including an additional valve.
Fig. 7 shows a longitudinal cross-section view of an example of a system including two or more tanks.
Fig. 8A shows a longitudinal cross-section view of an example of a system including two or more tanks featuring one, continuous insulation layer.
Fig. 8B shows a detailed view of a portion of the system in Fig. 8A.
Fig. 9 is a simplified schematic of an example of a hydrogen storage system.
Fig. 10 is a flow chart of an example of a method of operating the system of Fig. 9.
Fig. 11 is a simplified schematic of the components of a controller of use with the system of Fig. 9.
Fig. 12 highlights the usable capacity benefit of one embodiment of the proposed multi-tank system and thermal management operations for a typical five-day heavy-duty truck operating profile.

### DETAILED DESCRIPTION

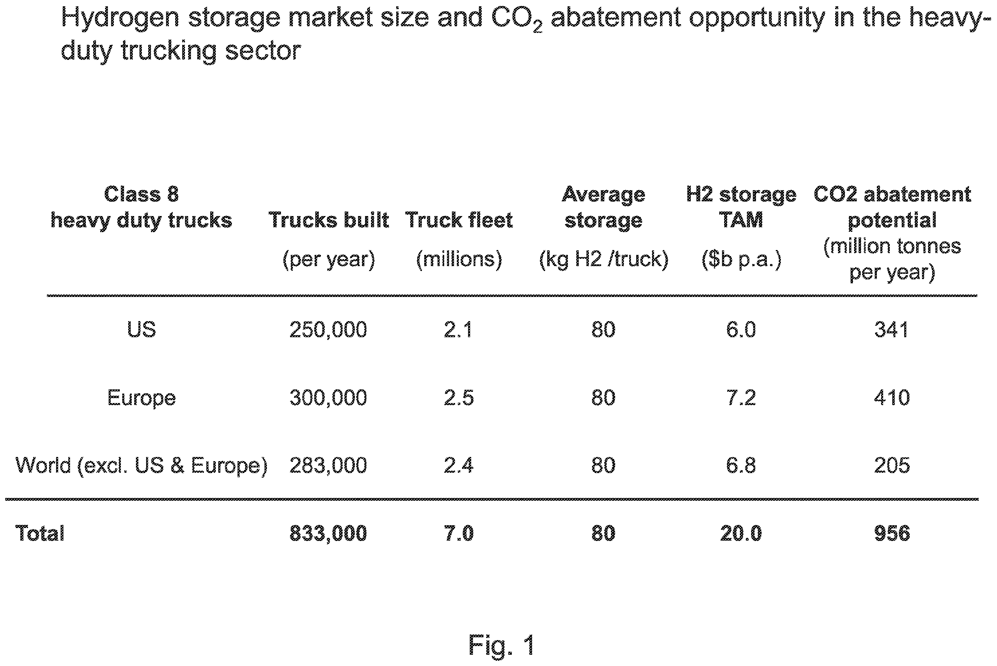

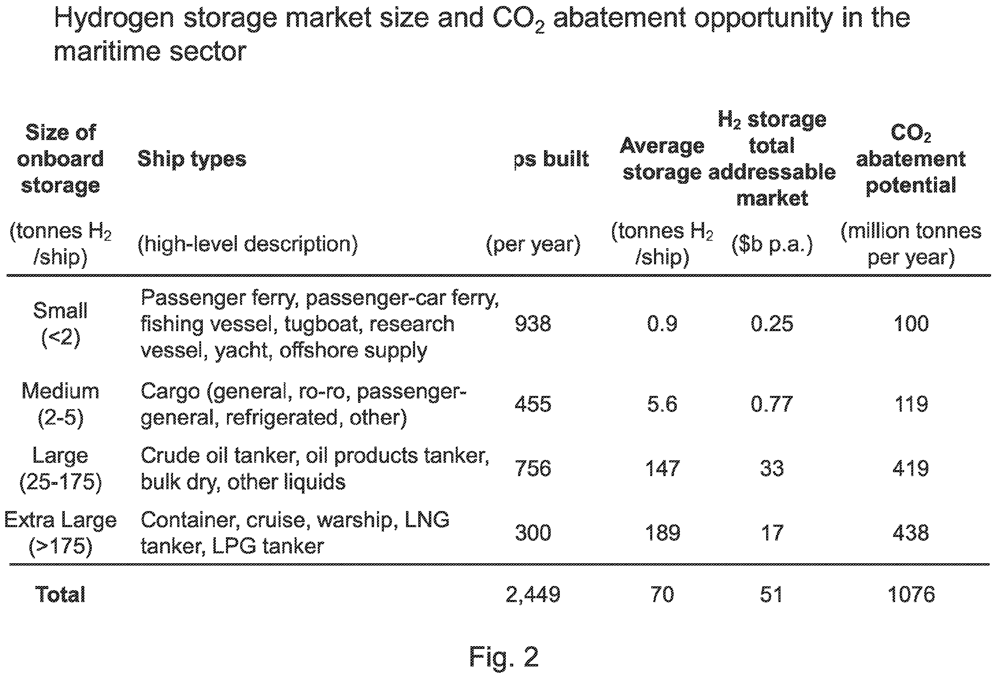

Cryo-compressed hydrogen, or CCH2, is a fuel that can accelerate decarbonization in the heavy-duty transportation sector. Some examples include heavy-duty trucks, marine vessels, aviation, hydrogen delivery vehicles, and/or other applications of hydrogen storage. More specifically, the present disclosure is directed to multi-tank systems and methods of storing and utilizing CCH2 on-board heavy-duty vehicles. Fig. 1 and Fig. 2 detail the CO₂ abatement and market opportunity in heavy-duty trucks and in maritime, respectively. Overall, it is a massive economic opportunity with great environmental imperative. Cryo-compressed hydrogen can provide fuel densities comparable to and even higher than liquid hydrogen without the cost of liquefaction, offering sufficiently high density at a cost lower than liquid hydrogen. The tradeoff between hydrogen cost and volumetric density may in general be optimized for cryo-compressed hydrogen at about 80 K and 300 bar. Note that the pressure-temperature envelope that enables similarly high densities extends beyond this one point, and for example can occur at combinations including but not limited to 50 K and 145 bar, 60 K and 200 bar, 90 K and 375 bar. Depending on the particular end case, the optimal density may be higher or lower than this.

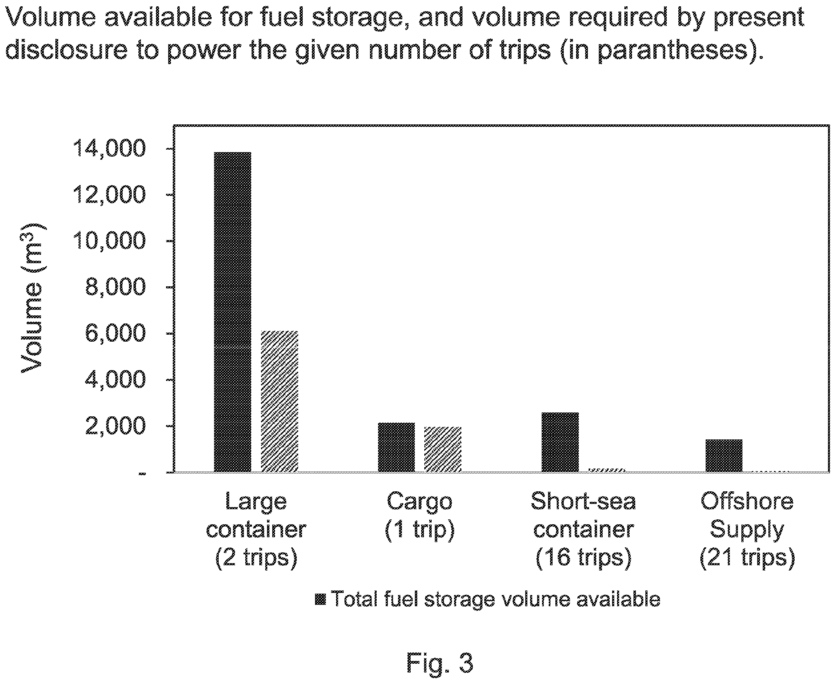

Fig. 3 illustrates that at these conditions, utilizing storage systems of the present disclosure, hydrogen may be stored on-board vessels within the existing fuel storage volumes used for hydrocarbon fuels. As an example, hydrogen stored in a storage system described herein can provide enough energy to power a large container ship for 2 trips, with fuel left over. While a traditional hydrocarbon fuel stored in the same volume would power such a ship for more trips, this type of stored hydrogen enables zero-emission power with minimal changes to logistics and ship scheduling. It was previously thought that only liquid hydrogen would be a possible solution for container and cargo ships.

Notably, the cryo-compressed hydrogen used can be cheaper than liquid hydrogen. Fig. 4 compares the compression of hydrogen at a refueling facility versus the centralized liquefaction and delivery to the refueling facility. Cryo-compressed hydrogen at about 80K and 300 bar, or more generally within the pressure-temperature envelop previously described, will likely fall in between these two prices, requiring less energy than liquefaction but slightly more energy, and cost, than compression. As decentralized compressed hydrogen can be around 60% cheaper, cryo-compression may likely also be cheaper than liquid. Importantly, decentralized hydrogen production will need to happen in order to meet global CO₂ reduction targets.

Many examples of the present disclosure on multi-tank systems minimize the number of tanks per amount of hydrogen stored, as well as minimize the number of valves per tank, so that the void spaces are minimized, the amount of fuel stored and utilized is maximized, failure and leak points are minimized, and overall storage cost is decreased.

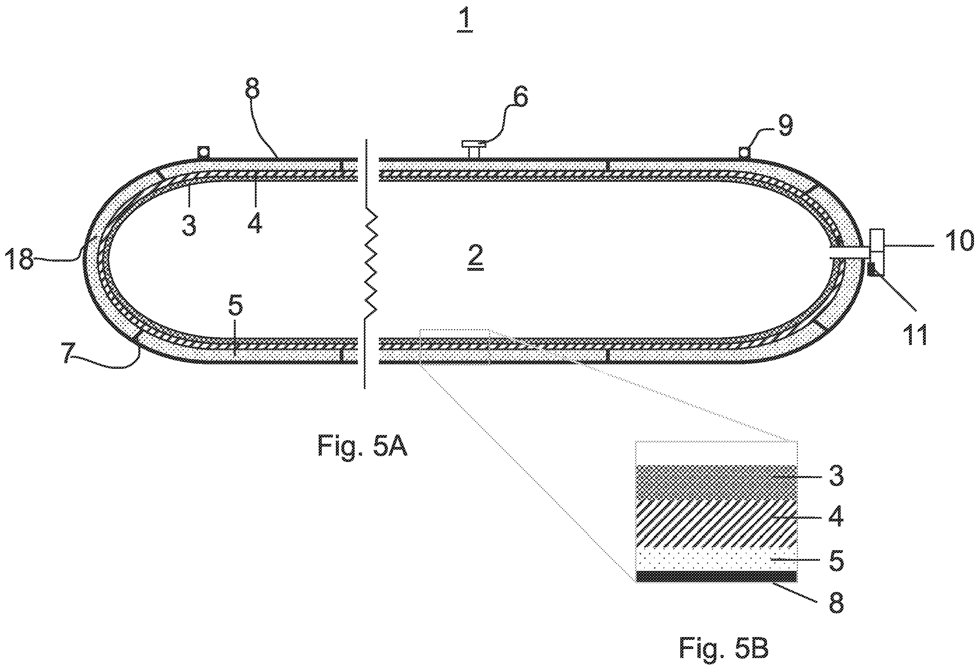

The individual storage vessels that make up the multi-vessel system, according to the present disclosure, may be designed to accommodate larger storage volumes. In one of many embodiments, a storage vessel (e.g., a tank) includes a liner **3** which encloses the internal storage volume **2,** as depicted for example in Fig. 5A. The liner **3** may be surrounded by a support layer, or overwrap **4.** The support layer **4** may be formed of a composite material, such as a fiber (e.g., glass, aramid, and/or carbon fiber, etc.) and a polymer resin. An outer wall or jacket, **8,** may surround the support layer **4** and may be separated by a distance from the support layer so as to define an insulation compartment **5.** The insulation compartment **5** may contain an insulating material such as metal foil, perlite, fiberglass, foam (e.g. expanded polystyrene or the like), silica fibers, or similar materials that can inhibit the transfer of heat between the environment and the internal storage volume **2.** In many examples, the insulation compartment **5** may be evacuated of gases or other fluids to form a vacuum. The vacuum may act like an insulating material to inhibit heat transfer.

As shown in Fig. 5A and 5B, the liner encloses the inner volume that stores a gaseous fuel such as hydrogen. The liner is typically metallic, such as stainless steel or/and aluminum. It can also be polymeric or other materials. At lower temperatures, metallic liners may perform more reliably and may have a longer lifetime than polymeric liners. However, polymeric liners may offer weight saving benefits. If a polymeric liner is used, the insulation layer can be foam, or a non-vacuum type of insulation. This avoids the issue of hydrogen permeation through the plastic liner which degrades the vacuum insulation layer performance. As such, polymeric liner and foam insulation is a suitable combination that is appropriate only for high and constant consumption rates, such as in autonomous trucking, as the self-cooling effect from tank discharge will compensate for the weaker insulation performance of non-vacuum foam. The liner **3** is typically the same level of thickness throughout the entire encapsulation of the inner void space. While thinner liners can be beneficial to maximize overall system hydrogen storage densities, the thickness may scale with stability, and will depend on the amount of support layer utilized. Typically, the support layer provides the majority of pressure stability. The optimal thickness depends on the tank dimensions but may be between 3 mm and 30 mm.

The overwrap **4** may be made of a lightweight material and serves the function of providing support, thereby increasing stability and lifetime of the tank. The composite material may be carbon-fiber, Kevlar^{™} (aramid), glass, or another carbon-based material that typically contains a fiber reinforced resin matrix build. The overwrap **4** may be manufactured by wrapping a fiber material embedded in a resin matrix over the liner and then curing the resin matrix, or by other suitable methods. A cryogenic-temperature resin can be used to further extend the lifetime of the tank. Resins that are not suitable at these temperature may crack, resulting in carbon fiber movement and thus lower fatigue life for the tank. The overwrap thickness may vary throughout the encapsulation of the liner.

The layer between the overwrap **4** and the outer wall **8** is the insulation layer **5.** The insulation layer **5** may be a void space that contains a vacuum, typically established by utilizing a high-vacuum source, reaching 1µbar or less. The function of the insulation layer **5** is to attenuate heat transfer from the external environment to the internal, stored hydrogen. The thickness of the insulation layer **5** and the vacuum pressure determine the extent of heat transfer mitigation. As is also known in the art, multilayer vacuum insulation, or superinsulation, may also be used to serve this purpose. As previously mentioned, depending on operating conditions, different insulation materials may be used, including those not requiring high vacuum. These ambient-pressure insulation materials, such as foam, may be compatible with non-metallic liners.

An outer wall, jacket, or outer shell **8** may enclose the insulation layer **5.** The outer shell **8** may mirror the shape of the interior vessel. However, it can also deviate from the shape; for instance, it may have caps that are less rounded. The insulation layer **5** thickness may therefore not be consistent throughout the entire encapsulation of the overwrap. The jacket **8** is typically metallic, for example stainless steel or aluminum but may be made of other materials. The thickness of the jacket **8** is usually less than that of the liner **3** and less than that of the overwrap **4** thickness.

The jacket **8** is kept in place and prevented from making contact with the overwrap **4** by support structure **7.** Support structures **7** can be various shapes, such as rods or rings, and may include insulating materials with high compression strength.

Fluid flows in and out through valve **10,** which may contain two separate and isolable channels. The valve may function mechanically, pneumatically, hydraulically, or electronically. Each channel can be controlled by a flow control valve, and may provide control at a 500 mbar to 1 bar resolution. The valve **10** can be connected to fluid lines for refueling or for fuel consumption, at the end of the two isolable channels. The valve may also be a single channel, which enables flow in and out of the tank.

As shown in Figs. 5A and 5B, the overwrap **4** is formed over the liner **3.** Support structures **7** may be added, and the jacket **8** may be mounted. Vacuum may be established after construction by connecting a vacuum pump to the vacuum valve **6.**

The tank **1** may be used on-board a truck or other heavy-duty transportation modalities, including ships or planes. A tank **1** may also be used off-board, for instance to provide hydrogen fuel for backup power generation. The tank system is agnostic to the downstream hydrogen consumption method. Typically, for on-board use, the tank **1** is connected via appropriate piping up to the refueling infrastructure. In one specific example, hydrogen flows in through valve **10.** If supercritical hydrogen is used, it may warm up. To mitigate temperature increase due to this flow work, the hydrogen may be flowed through the tank to quickly pre-cool the tank. In such a scenario, one of the two channels in valve **10** will let in hydrogen flow, which the other channel enables hydrogen to leave. Upon filling, one of the two channels is then connected to the desired hydrogen fuel consumption method. The transducer **11** enables electronic monitoring and control of hydrogen pressure flow required for the consumption method.

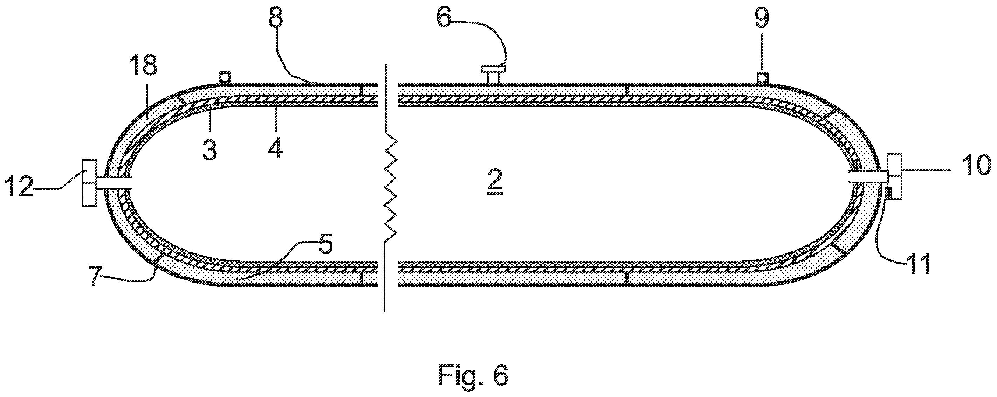

In one example, a proposed cryo-compression tank may have a high length-to-diameter ratio, L/D, such that the inner tank diameter remains small relative to the length, typically 40 - 80 centimeters, and the tank length to be long, typically 5 - 12 meters. In another set of embodiments, suited more for truck on-board storage, the diameter may be 20 - 60 centimeters and a length ranging from 1 - 3 meters. In various examples, the L/D ratio may be about 2, 3, 4, 5, 6, 7, 8, 9, 10, 11, 12, 13, 14, 15, 16, 17, 18, 19, 20, 21, 22, 23, 24, 25, 26, 27, 28, 29, 30, or higher. The relatively thin diameters may enable the use of a relatively thin overwrap 4 and liner **3,** which may increase volumetric hydrogen system densities. Fig. 6A shows one embodiment in a longitudinal cross-sectional view. An example size includes an external radius of roughly 40 centimeters and an overall volume of 2500 to 3000 liters. This tank **1** is capable of storing around 190 kg of hydrogen. The tank 1 may have a long, thin cylindrical shape with a cap **18** at each end formed with or attached to the cylindrical section. The cap **18** may be hemispherical. The caps **18** and the cylindrical section may define inner storage volume **2.** The inner storage volume **2** may make up a majority of the system volume. The inner wall material, or liner **3,** is typically metallic, for example aluminum or stainless steel. As the lifetime of onboard marine vessels is longer than on-land transportation, polymeric liner, utilized in light-duty applications, may not meet duration standards.

In one exemplary embodiment, such as that in Fig. 5A, there is a vacuum valve **6** to ensure vacuum is maintained in the insulation layer **5.** On the outside are two hollow fittings **9** built such that they facilitate the picking up and swapping of tanks onboard a vessel. These fittings can be metallic, or other materials with high tensile strength. There can be more than two fittings. In this embodiment valve **10** contains two controllable flow channels. There may be a pressure transducer **11** and/or a temperature transducer which may be in fluidic communication with the internal storage volume **2,** and operate to measure the temperature and or pressure of the fluid in the internal storage compartment **2.** As previously mentioned, in another embodiment, there may be only one channel for hydrogen to flow in and out.

Fig. 6 shows another exemplary embodiment of an individual tank that can subsequently make up a multi-tank system, this one embodiment containing a second valve **12** at the hemispherical cap end opposite the valve **10.** The valves **10** and **12** may facilitate fluid flow-through between multiple tanks. For example, a daisy-chained configuration may be used during refueling events to pre-cool one or more tanks.

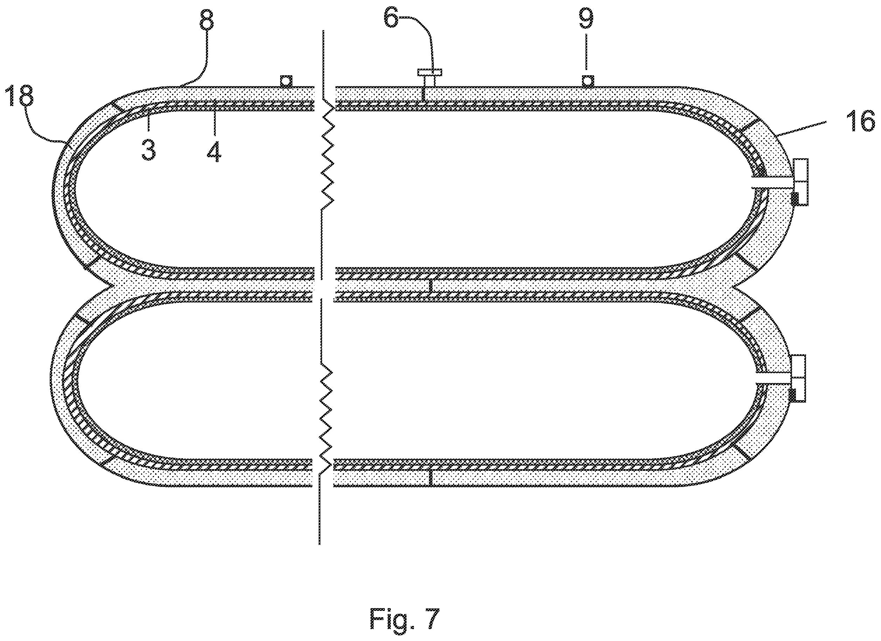

Fig. 7 shows an exemplary embodiment of a multi-tank system. The jacket **16,** typically stainless steel or aluminum, contains multiple tanks, and in this example two tanks, but three, four, five, six or more may be used. Overall, this approach can be extended to more than two inner tanks. This arrangement may result in increased volumetric density relative to traditional multi-tank arrangements, as void spaces between tanks are minimized. In particular, one insulation layer is shared between multiple tanks, further decreasing storage volume.

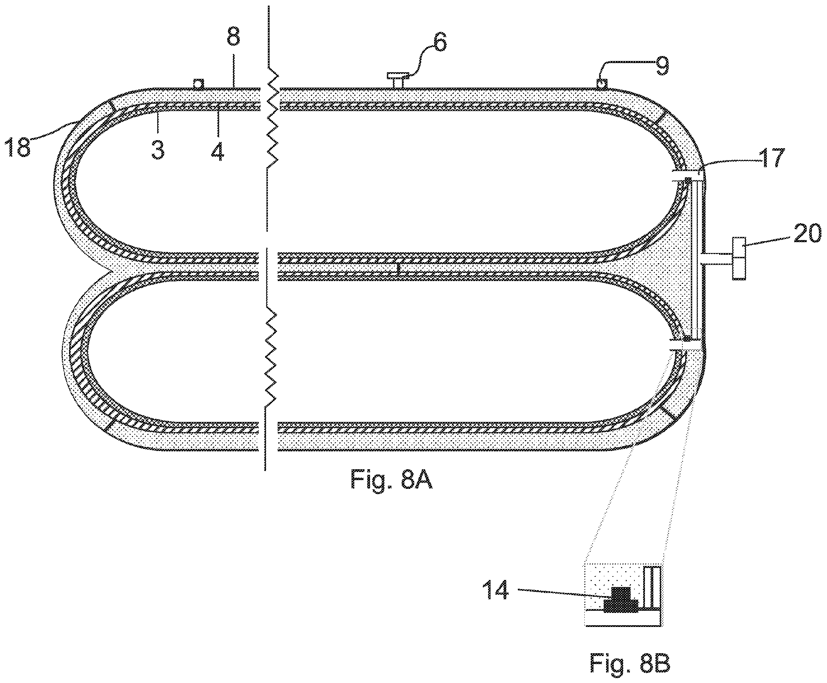

Fig. 8A illustrates another embodiment for a multi-tank system. Here, the manifold **17** is connected to one outer tank valve **20.** Thus, one valve can be used for multiple tanks. This concept can be extended to three or more tanks. The manifold **17** connects to a valve that controls fluidic flow to each tank, as shown in Fig. 8B. A transducer **14** near the valve monitors pressure. This arrangement may serve multiple functions. The system of Fig. 8A may have certain advantages. First, if there is a leak within the manifold **17** it can be more effectively contained as vacuum surrounds the valves. Second, this system halves the number of valves that are repeatedly connected and disconnected, decreasing probability of leaks and other failure modes, as there is only one outer valve **20.** This can accelerate operations in a safe manner in examples where the tanks are frequently removed from the vehicle (i.e. tank swapping). Third, as the hydrogen line may sometimes need to be insulated, its placement within the insulation layer makes more efficient use of space. It can be appreciated that three or more tanks may be connected to a single internal manifold which is then connect to one outer valve. This may be important in the case of tank removal from onboard the vessel, or tank swapping, as it may greatly decrease the time to disconnect tanks. In other embodiments, no transducer is required, so that two, or more tanks, are in thermal equilibrium, and constitute one continuous storage volume for hydrogen. In such an embodiment, valve **20** controls the flow in and out of hydrogen. This type of arrangement minimizes hydrogen leaks altogether, minimizes failure modes, and minimizes cost.

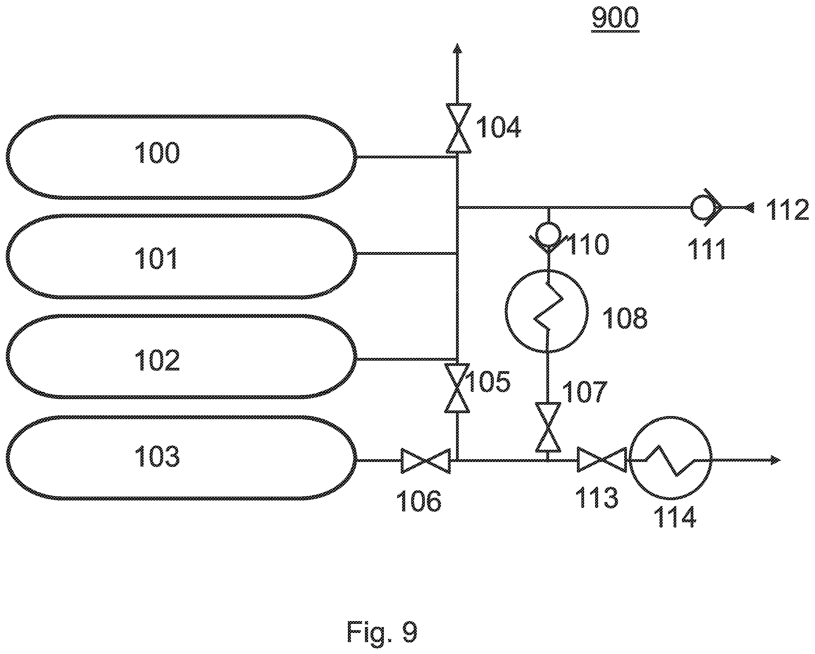

Placing a heat exchanger within a tank has been previously proposed, e.g., for single-tank systems for light-duty vehicle onboard application. For on-board application, where the capacity of hydrogen is greater, (e.g. 10x greater in heavy-duty trucks, >100x greater in maritime and aviation), placing a heat exchanger inside each tank will in sum represent a large decrease in the total hydrogen storage space. Furthermore, each heat exchanger inside a tank likely introduces new potential gas or thermal leaks, and drives up storage cost. In contrast, the operating method for the multi-tank system of Fig. 9 avoids an internal heat exchanger and can, for example, warm up hydrogen as it exchanges between two tanks. Overall, this fluidic exchange operating method can result in higher usable hydrogen capacities (amount of hydrogen discharged/initial total amount of hydrogen stored in system) compared to a system without a heat exchanger. Importantly, as additional components are not required for each tank, and as the amount of usable capacity increases, on a cost per usable capacity of the system, this approach may be less costly than a system with no thermal management operations. Prior art systems have unsuccessfully tried to address the problem of withdrawing hydrogen from vessels by adding auxiliary, non-cryogenic hydrogen tanks to the system. These auxiliary hydrogen tanks are dedicated to store hydrogen at sub-critical or non-cryogenic conditions, are not cryo-compressed hydrogen tanks, and do not contribute to the usable capacity of the system. Additionally, the need to package an auxiliary hydrogen tank that does not contribute to the system storage capacity results in a lower overall specific system storage capacity in both gravimetric and volumetric terms compared to systems of the present disclosure (e.g., lower kg H₂/m³ and kg H₂/kg of the storage system) both of which are important metrics in the viability of any fuel storage system for mobile applications.

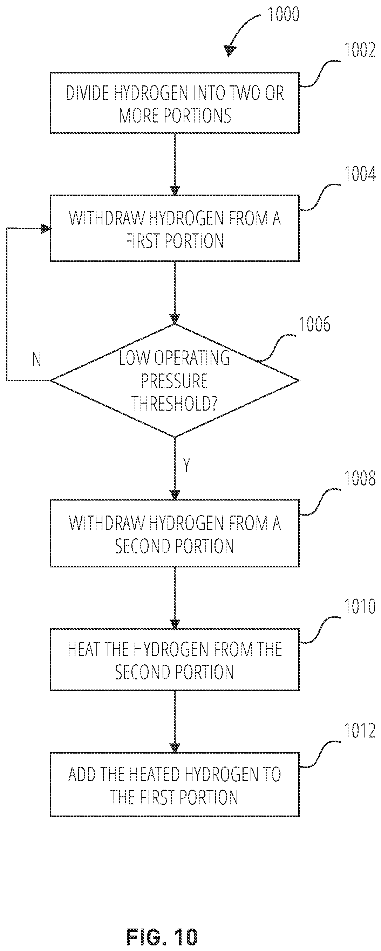

Fig. 9 is a simplified diagram of a fuel storage system 900. A method 1000 of operating the system 900 is discussed with respect to Fig. 10 to describe the method of thermal management operation of one embodiment of the cryo-compressed multi-tank storage system described in this present disclosure. While four tanks are shown, the basic operations described here can be used for more or fewer tanks. The tanks can comprise of those depicted in Fig. 6, Fig. 7, Fig. 8, or varying combinations, with no modifications or with some modifications.

In the present example, cryo-compressed storage tanks 100, 101, and 102 are in direct fluid communication with each other and with a hydrogen manifold (e.g., the tanks do not have individual hydrogen control valves), and as such all three tanks in this example can be thought of as one storage space, or one portion of stored hydrogen. In this example, multiple cryogenic pressure tanks serve as one stored hydrogen portion. Having one stored portion across multiple tanks decreases the number of balance-of-plant components and minimizes cost. Additionally, using more, smaller tanks aids packaging flexibility, compared to one larger tank. Furthermore, it can decrease the probability of leaks, such as those that occur from hydrogen control valves into the insulated vacuum system. Rather than having four hydrogen control valves, only tank 103 has a dedicated hydrogen control valve 106.

To refuel, cryo-compressed hydrogen enters at supply line 112 and passes a check valve 111. Typically, the supply line 112 is insulated, such as by high-vacuum insulation. The hydrogen enters the tanks 100, 101, and 102. Valves 105 and 106 are open during the refueling operation, so tank 103 is also filled. Valves 104, 107, and 113 remain closed during refueling operations.

During vehicle operation, tanks 100, 101, and 102 can be the first storage volume, or stored hydrogen portion, to be discharged. Once the fuel cell or other hydrogen-consuming device or system requires hydrogen, valves 105 and 113 are opened. In examples discussed herein, it is understood that a fuel cell may be replaced with any other device or system that consumes hydrogen. The hydrogen is conveyed to a heat exchanger 114, and ultimately enters the fuel cell.

The heat exchanger 114 can utilize thermal waste from the fuel cell to warm up the hydrogen towards ambient temperatures, before it enters the fuel cell. Once this set of tanks, tanks 100, 101, and 102, are close to, or reach their minimal operating pressure, which in some cases is 5 - 15 bar, valve 105 is closed. As the temperature is very low (e.g., 30 K) in tanks 100, 101, and 102, a notable amount of hydrogen can remain in this portion. For example, as much as 20% of the tank hydrogen capacity may remain in the tank and inaccessible. It is beneficial to extract as much hydrogen as possible from the system, for example to achieve higher vehicle range or autonomy.

To continue fuel cell operations, valve 106 opens (valve 105 remains closed), discharging some of the hydrogen from tank 103. Some of the flow is conveyed through valve 113 and into the heat exchanger 114. Depending on fuel cell needs, the remaining hydrogen flow, which can be a percentage of the flow being conveying to the fuel cell, is conveyed through valve 107, and into a heat exchanger, or heater, 108. Valve 107 can be a flow regulating valve and for example, conveying about 25% of the flow that goes towards the fuel cell, through valve 107. Valve 107 is opened when the first stored hydrogen portion, (e.g., the hydrogen in tanks 100, 101, and 102), should be warmed up to extract more hydrogen.

The heat exchanger or heater 108 can use a minor amount of the thermal waste heat arising at the fuel cell, or other suitable heat source such as an electric heater. In one embodiment, heating powers as low as 0.1 kW can be utilized. This energy is transferred to the hydrogen which warms up, passes through check valve 110 and is introduced to tanks 100, 101, and 102 via the main supply line. The warm hydrogen consequently warms up this storage space, or portion, greatly increasing the pressure in the system containing tanks 100, 101, and 102. For example, the pressure in the tanks 100, 101, and 102 may increase from 8 bar to 50 bar. The hydrogen released from tank 103 and passing through the heat exchanger 108 functions as a heat carrying medium which obviates the need for an in-tank heat exchanger. Furthermore, the system 900 avoids the need to have auxiliary stored hydrogen tanks for which the only purpose is to store and provide warm hydrogen, but which cannot store cryogenic hydrogen. Such an approach is not efficient from a usable capacity point of view. In contrast, the system 900 has tanks which all can store cryo-compressed hydrogen and all contribute to power the fuel cell. This warming up process can occur simultaneously as the fuel cell is fed hydrogen from tank 103. Once tank 103 reaches its minimum operation pressure, typically 5 - 15 bar, valve 106 and 107 is closed, and valve 105 is opened, which discharges the now warm and greater pressure hydrogen from tanks 100, 101, and 102. The system 900 and operating method increases the amount of hydrogen that is usable for consumption, and thus the useable capacity of the storage system. In one embodiment, this can increase usable hydrogen capacity by 10% compared to prior systems. Minimal operating valves are used, thereby reducing cost, weight, volume, control complexity, and leak points, no in-tank heat exchangers are used, and no auxiliary tanks are required. It is appreciated that different number of tanks and various operation sequences can be utilized beyond the one described herein. Furthermore, the system 900 is suitable to supply hydrogen to a fuel cell or other hydrogen consumption device at a rate of 5 kg / hour our higher.

Fig. 10 describes a method 1000 of operating the cryo-compressed storage system. The method 1000 may begin in operation 1002 and the hydrogen is divided into two or more portions, such as by automatic control of one or more valves by a processing element 1102 of the system 900. A given portion can be stored in one tank, or a plurality of tanks. For example, one portion may be stored in the tanks 100, 101, and/or 102 and a second portion may be stored in the tank 103.

The method 1000 may proceed to operation 1004 and hydrogen is withdrawn from a first portion of the two or more portions. In one example, the hydrogen is withdrawn to power a fuel cell on board a vehicle. In another example, the hydrogen is withdrawn and conveyed to an internal combustion engine. For example, the valves 105 and 113 may be opened by a processing element of the system 900 enabling a flow of the first portion of hydrogen from the tanks 100, 101, and/or 102.

The method 1000 may proceed to operation 1006 and the system 900 determines whether a tank, or tanks, storing the first portion of hydrogen has reached a low operating pressure threshold. If the first portion of hydrogen is not at a low pressure threshold, the method 1000 may return to the operation 1004 and continue withdrawing hydrogen. Alternately, the system 900 may stop the withdrawal of hydrogen, such as if the hydrogen demand from a fuel cell or other device is removed. In one example, once a portion of the stored hydrogen is at or close to (e.g., within 10%) of a low operating pressure threshold (e.g., 5-15 bar), the method may proceed to operation 1008.

In operation 1008, hydrogen is withdrawn from a second portion (e.g., the portion stored in the tank 103). For example, the valve 105 may be closed and the valve 106 may be opened by a processing element 1102 of the system 900. Based on pressure and temperature sensors 1114, a processing element 1102 of the system 900 can determine when a stored portion can benefit from increasing the temperature in that portion. In one example, a portion may have hydrogen below the low operating pressure threshold, and so increasing the temperature will result in a higher pressure, enabling the system 900 to use more hydrogen from this given stored portion. In another example, a stored portion of hydrogen may be above the low operating pressure threshold but may nonetheless benefit from increased temperature as it will ultimately allow more hydrogen to be withdrawn for this given portion.

The method 1000 may proceed to operation 1010 and a portion of the hydrogen withdrawn in operation 1008 is conveyed through the heater or heat exchanger 108 and heated. In one example, this heat exchanger 108 is distinct from the heat exchanger 114 used to warm up hydrogen for end-use operations. In another example, the heat exchangers 108 and 114 are the same the same heat exchanger.

The method 1000 may proceed to operation 1012 and the hydrogen warmed in operation 1010 is conveyed back into the storage system and is introduced into the portion that would benefit from warm hydrogen, thereby releasing additional hydrogen from that portion. In one example, the warming operation occurs simultaneous as hydrogen is withdrawn for end use, such as powering a fuel cell. It is also possible that the warmed hydrogen enters the portion from which hydrogen is being withdrawn. This may be enabled by an outlet tube and an inlet tube to this given portion. The method 1000 may be executed in different orders than that described. Some operations may be omitted and some operations may be executed in parallel with one another. In Fig. 10, the order shown is presented for clarity, but can be executed in different orders.

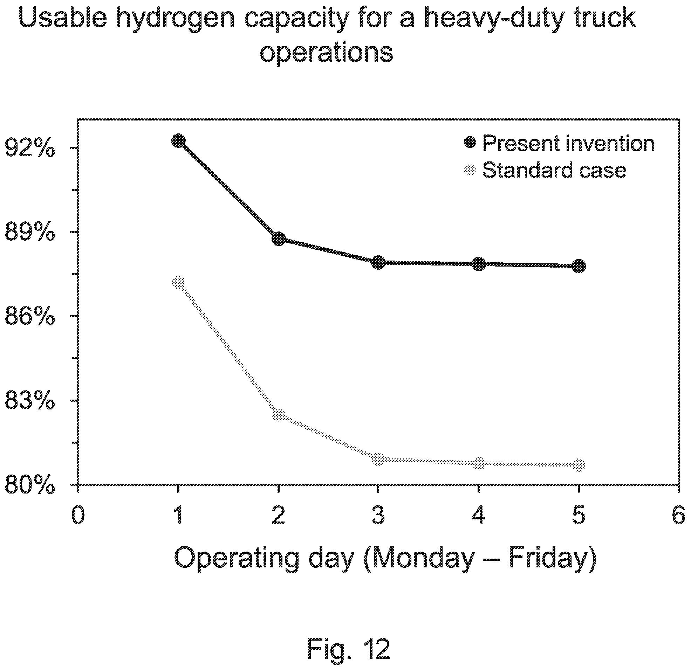

The operating method of thermal management described here has numerous benefits relative to standard, isolated cryo-compressed tanks, that costs as much, if not more, than present disclosure. As shown in Fig. 12, the system usable hydrogen capacity (amount of hydrogen discharged/initial total amount of hydrogen stored in system) is greater across the full operating cycle of a typical long-range heavy-duty truck, such as one driving more than 500 miles (805 km) a day. By day three, a steady-state operating temperature is reached, which is colder than that reached in day one. As a result, the thermal management operation has an even greater effect when steady-state conditions are realized.

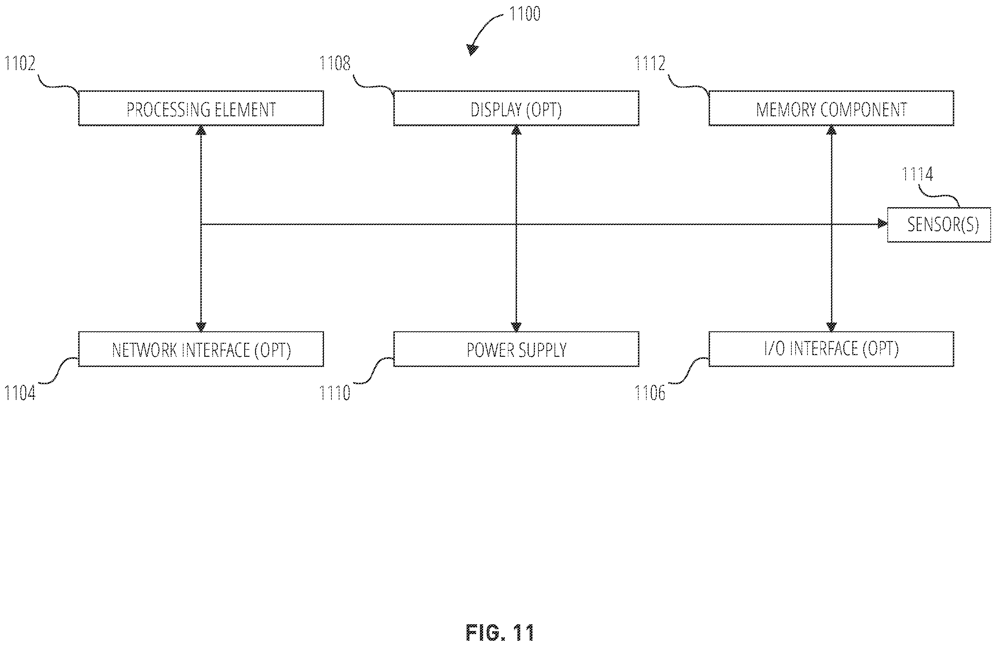

FIG. 11 illustrates a simplified block diagram for a controller 1100 of the system 900. The controller 1100 may automatically execute any operation of any method disclosed herein including the method 1000, such as by automatic operation of the valves or other equipment of the system 900, reading of sensors, or the like. As shown, the controller 1100 may include one or more processing elements 1102, an optional display 1108, one or more memory components 1112, a network interface 1104, optional power supply 1110, and an optional input/output (I/O) interface 1106, and/or one or more sensors 1114. The various components may be in direct or indirect communication with one another, such as via one or more system buses, contract traces, wiring, or via wireless mechanisms.

The one or more processing elements 1102 may be substantially any electronic device capable of processing, receiving, and/or transmitting instructions. For example, the processing elements 1102 may be a microprocessor, microcomputer, graphics processing unit, or the like. It also should be noted that the processing elements 1102 may include one or more processing elements or modules that may or may not be in communication with one another. For example, a first processing element may control a first set of components of the system 900 and a second processing element may control a second set of components of the system 900 where the first and second processing elements may or may not be in communication with each other. Relatedly, the processing elements 1102 may be configured to execute one or more instructions in parallel locally, and/or across the network, such as through cloud computing resources.

The display 1108 is optional and provides an input/output mechanism for devices of the controller 1100, such as to display visual information (e.g., images, graphical user interfaces, videos, notifications, and the like) to a user, and in certain instances may also act to receive user input (e.g., via a touch screen or the like). The display may be an LCD screen, plasma screen, LED screen, an organic LED screen, or the like. The type and number of displays may vary with the type of devices (e.g., smartphone versus a desktop computer).

The memory components 1112 store electronic data that may be utilized by the controller 1100, such as audio files, video files, document files, programming instructions, and the like. The memory components 1112 may be, for example, non-volatile storage, a magnetic storage medium, optical storage medium, magneto-optical storage medium, read only memory, random access memory, erasable programmable memory, flash memory, or a combination of one or more types of memory components.

The network interface 1104 receives and transmits data to and from a network to the various devices of the system 900. The network interface 1104 may transmit and send data to the network directly or indirectly. For example, the networking/communication interface may transmit data to and from other computing devices through the network. In some embodiments, the network interface may also include various modules, such as an application program interface (API) that interfaces and translates requests across the network to the controller 110 or other components of the system 900. The network interface 1104 may be any suitable wired or wireless interface. For example, the network may be an Ethernet network, Wi-Fi, Bluetooth, Wi-Max, Zigbee network, Controller Area Network ("CAN"), the internet, microwave link, or the like.

The various devices of the system 900 may also include a power supply 1110. The power supply 1110 provides power to various components of the controller 1100. The power supply 1110 may include one or more rechargeable, disposable, or hardwire sources, e.g., batteries, power cord, AC/DC inverter, DC/DC converter, or the like. Additionally, the power supply 1110 may include one or more types of connectors or components that provide different types of power. In some embodiments, the power supply 1110 may include a connector (such as a universal serial bus) that provides power to the computer or batteries within the computer and also transmits data to and from the device to other devices.

The I/O interface 1106 allows the system 900 devices to receive input from a user and provide output to a user. In some devices, the I/O interface 1106 may be optional. For example, the I/O interface 1106 may include a capacitive touch screen, keyboard, mouse, stylus, or the like. The type of devices that interact via the input/output interface 1106 may be varied as desired.

The sensors 1114 may include any number of temperature, pressure, weight, force, proximity, limit, or other sensors. The sensors 1114 may be integrated with the controller 1100 or may be separate devices in communication with the controller 1100 such as by direct wired communication, wireless communication, the network interface 1104, or the like. In many embodiments the sensors 1114 may measure fluid conditions in the system 900 such as in one or more tanks, in a heat exchanger, or the like.

The description of certain embodiments included herein is merely exemplary in nature and is in no way intended to limit the scope of the disclosure or its applications or uses. In the included detailed description of embodiments of the present systems and methods, reference is made to the accompanying drawings which form a part hereof, and which are shown by way of illustration specific to embodiments in which the described systems and methods may be practiced. These embodiments are described in sufficient detail to enable those skilled in the art to practice presently disclosed systems and methods, and it is to be understood that other embodiments may be utilized, and that structural and logical changes may be made without departing from the scope of the disclosure. Moreover, for the purpose of clarity, detailed descriptions of certain features will not be discussed when they would be apparent to those with skill in the art so as not to obscure the description of embodiments of the disclosure. The included detailed description is therefore not to be taken in a limiting sense, and the scope of the disclosure is defined only by the appended claims.

From the foregoing it will be appreciated that, although specific embodiments of the invention have been described herein for purposes of illustration, various modifications may be made without deviating from the scope of the invention.

The particulars shown herein are by way of example and for purposes of illustrative discussion of the preferred embodiments of the present invention only and are presented in the cause of providing what is believed to be the most useful and readily understood description of the principles and conceptual aspects of various embodiments of the invention. In this regard, no attempt is made to show structural details of the invention in more detail than is necessary for the fundamental understanding of the invention, the description taken with the drawings and/or examples making apparent to those skilled in the art how the several forms of the invention may be embodied in practice.

As used herein and unless otherwise indicated, the terms "a" and "an" are taken to mean "one", "at least one" or "one or more". Unless otherwise required by context, singular terms used herein shall include pluralities and plural terms shall include the singular.

Unless the context clearly requires otherwise, throughout the description and the claims, the words 'comprise', 'comprising', and the like are to be construed in an inclusive sense as opposed to an exclusive or exhaustive sense; that is to say, in the sense of "including, but not limited to". Words using the singular or plural number also include the plural and singular number, respectively. Additionally, the words "herein," "above," and "below" and words of similar import, when used in this application, shall refer to this application as a whole and not to any particular portions of the application.

Of course, it is to be appreciated that any one of the examples, embodiments or processes described herein may be combined with one or more other examples, embodiments and/or processes or be separated and/or performed amongst separate devices or device portions in accordance with the present systems, devices and methods.

Finally, the above discussion is intended to be merely illustrative of the present system and should not be construed as limiting the appended claims to any particular embodiment or group of embodiments. Thus, while the present system has been described in particular detail with reference to exemplary embodiments, it should also be appreciated that numerous modifications and alternative embodiments may be devised by those having ordinary skill in the art that fall within the scope of the claims that follow. Accordingly, the specification and drawings are to be regarded in an illustrative manner and are not intended to limit the scope of the appended claims.

### III. Advantages

From the description above, a number of advantages of the present disclosure become evident:
(a) By having a valve at each end of the hemispherical cap, pre-cooling by flowing gas through is possible, and this may take less time than other pre-cooling methods.
(b) A combination of non-vacuum insulation and a plastic liner may be the lowest cost option for high-utilization on-board storage applications, such as autonomous trucks.
(c) The self-cooling from hydrogen high-flow discharge, such as operative in autonomous trucks, can compensate for the lower performance of non-vacuum insulation.
(d) A resin suitable for cryogenic temperature may extend the fatigue life of tanks, as it prevents carbon fiber movement over many cycles.
(e) The described manifold enables hydrogen exchange between the tanks. This can obviate the need of in-tank heat exchangers and auxiliary tanks, which decrease system density, introduce failure modes for hydrogen leaks, and increases costs.
(f) The described thermal management operations do not require an in-tank heat exchanger or auxiliary storage tanks that only contribute to thermal management but not to usable capacity.
(g) The heating power in this described manifold is minimal, yet it can increase usable hydrogen capacity, and thereby range.
(h) The storage systems are substantially cheaper as they have less valves per tank than other multi-tank arrangements, do not require in-tank heat exchangers, and the thermal management requires simple operations.
(i) The hydrogen line can be part of the tank insulation layer, which increases system volumetric density.
(j) The minimal number of insulated hydrogen control valves decreases the probability of hydrogen leaking into the insulated manifold.

## Claims

1. A storage system comprising:
a plurality of tanks (100,101,102,103) in fluid communication with one another via a manifold, wherein:
a first of tank (100,101,102) of the plurality of tanks is fluidically coupled to a valve (105) that controls a flow of cryo-compressed hydrogen flow in and out of the first tank (100,101,102);
a second tank (103) of the plurality of tanks is in direct fluid communication with the manifold;
**characterized by** a heater (108) is disposed in the manifold such that hydrogen can be exchanged between the first tank (100,101,102) and the second tank (103) while being heated by the heater (108).

2. The system of claim 1, wherein each tank (100,101,102,103) of the plurality of tanks comprises:
an outer wall (8);
a support layer (4) disposed inside and spaced apart from an inner surface of the outer wall (8), wherein the inner surface of the outer wall (8) and an outer surface of the support layer (4) define an insulation compartment (5) therebetween; and
a liner (3) disposed inside an inner surface of the support layer (4), wherein the liner (3) forms a closed storage volume (2).

3. The system of any of claims 1-2, wherein the closed storage volume (2) is at least 100 liters.

4. The system of any of claims 2-3, wherein the insulation compartment (5) encapsulates at least the first tank (100,101,102) and the second tank (103) and optionally, the insulation compartment (5) contains an insulating material comprising metal foil, perlite, fiberglass, foam, or silica fibers.

5. The system of any of claims 2-4 wherein the insulation compartment (5) comprises a vacuum.

6. A system, as in any of the preceding claims, further comprising a processing element (1102) configured to automatically control the valve (105).

7. The system of any of claims 2-6, wherein insulation included in the insulation layer (5) is configured to operate at atmospheric pressure.

8. They system of any of claims 2-7 wherein the liner (3) comprises metal or polymer.

9. The system of any of claims 2-8, wherein the liner (3) has a thickness between 3 mm and 30 mm.

10. The system of any of claims 2-9, wherein the support layer (4) comprises carbon fiber, aramid, or glass.

11. A method of operating a cryo-compressed storage system (900), the system (900) comprising a plurality of cryogenic tanks (100,101,102,103) adapted to store a supply of hydrogen, the method comprising:
dividing the hydrogen into a plurality of portions (1002);
storing each of the portions in respective first (100,101,102) and second cryogenic tanks (103) of the plurality of cryogenic tanks (100,101,102,103);
withdrawing (1004) at least part of a first portion of the plurality of portions from the first cryogenic tank (100,101,102);
responsive (1006) to the first cryogenic tank (100) containing a remainder of the first portion, such that the first respective cryogenic tank (100,101,102) is at least partially depleted, withdrawing (1008) a first amount of hydrogen of the second portion from the second cryogenic tank (103);
**characterized by** heating (1010), via a heater (108) external to the plurality of cryogenic tanks (100,101,102,103), the first amount of hydrogen; and
providing (1012) the first amount of hydrogen to the first cryogenic tank (100,101,102) such that the first amount of hydrogen heats the remainder of the first portion.

12. The method of claim 11, further comprising providing a second amount of hydrogen of the second portion to a hydrogen consumption device.

13. The method of claim 11, wherein a temperature of the first amount of hydrogen after heating is based on a characteristic of the remainder of the first portion and wherein the characteristic may comprise at least one of a temperature, a pressure, or an amount of the remainder.

14. The method of claim 11, further comprising:
responsive to the first cryogenic tank (100,101,102) being at least partially depleted, ceasing the withdrawal of the first portion; and
withdrawing a second amount of hydrogen of the second portion.

15. The method of claim 12, comprising heating the second amount of hydrogen.

## Patentansprüche

1. Ein Speichersystem, das Folgendes beinhaltet:
eine Vielzahl von Tanks (100, 101, 102, 103) in Fluidkommunikation miteinander über einen Verteiler, wobei:
ein erster Tank (100, 101, 102) der Vielzahl von Tanks fluidisch mit einem Ventil (105) gekoppelt ist, das einen Fluss von kryokomprimiertem Wasserstofffluss in den und aus dem ersten Tank (100, 101, 102) steuert;
ein zweiter Tank (103) der Vielzahl von Tanks in direkter Fluidkommunikation mit dem Verteiler steht;
**dadurch gekennzeichnet, dass** eine Heizung (108) so in dem Verteiler angeordnet ist, dass Wasserstoff zwischen dem ersten Tank (100, 101, 102) und
dem zweiten Tank (103) ausgetauscht werden kann, während er durch die Heizung (108) erwärmt wird.

2. System gemäß Anspruch 1, wobei jeder Tank (100, 101, 102, 103) der Vielzahl von Tanks Folgendes beinhaltet:
eine Außenwand (8);
eine Stützschicht (4), die innerhalb und beabstandet von einer Innenoberfläche der Außenwand (8) angeordnet ist, wobei die Innenoberfläche der Außenwand (8) und eine Außenoberfläche der Stützschicht (4) eine Isolierkammer (5) dazwischen definieren; und
eine Auskleidung (3), die innerhalb einer Innenoberfläche der Stützschicht (4) angeordnet ist, wobei die Auskleidung (3) ein geschlossenes Speichervolumen (2) bildet.

3. System gemäß einem der Ansprüche 1-2, wobei das geschlossene Speichervolumen (2) mindestens 100 Liter beträgt.

4. System gemäß einem der Ansprüche 2-3, wobei die Isolierkammer (5) mindestens den ersten Tank (100, 101, 102) und den zweiten Tank (103) einkapselt und optional die Isolierkammer (5) ein Isoliermaterial enthält, das Metallfolie, Perlit, Glasfasern, Schaum oder Siliciumdioxidfasern beinhaltet.

5. System gemäß einem der Ansprüche 2-4, wobei die Isolierkammer (5) ein Vakuum beinhaltet.

6. System gemäß einem der vorhergehenden Ansprüche, das ferner ein Verarbeitungselement (1102) beinhaltet, das konfiguriert ist, um das Ventil (105) automatisch zu steuern.

7. System gemäß einem der Ansprüche 2-6, wobei die Isolierung, die in der Isolierschicht (5) umfasst ist, konfiguriert ist, um bei atmosphärischem Druck zu arbeiten.

8. System gemäß einem der Ansprüche 2-7, wobei die Auskleidung (3) Metall oder Polymer beinhaltet.

9. System gemäß einem der Ansprüche 2-8, wobei die Auskleidung (3) eine Dicke zwischen 3 mm und 30 mm aufweist.

10. System gemäß einem der Ansprüche 2-9, wobei die Stützschicht (4) Kohlenstofffaser, Aramid oder Glas beinhaltet.

11. Ein Verfahren zum Betreiben eines kryokomprimierten Speichersystems (900), wobei das System (900) eine Vielzahl von kryogenen Tanks (100, 101, 102, 103) beinhaltet, die angepasst sind, um eine Wasserstoffzufuhr zu speichern, wobei das Verfahren Folgendes beinhaltet:
Teilen des Wasserstoffs in eine Vielzahl von Abschnitten (1002);
Speichern jedes der Abschnitte in jeweiligen ersten (100, 101, 102) und zweiten kryogenen Tanks (103) der Vielzahl von kryogenen Tanks (100, 101, 102, 103);
Entnehmen (1004) mindestens eines Teils eines ersten Abschnitts der Vielzahl von Abschnitten aus dem ersten kryogenen Tank (100, 101, 102);
als Reaktion (1006) darauf, dass der erste kryogene Tank (100) einen Rest des ersten Abschnitts enthält, sodass der erste jeweilige kryogene Tank (100, 101, 102) mindestens teilweise entleert ist, Entnehmen (1008) einer ersten Wasserstoffmenge des zweiten Abschnitts aus dem zweiten kryogenen Tank (103);
**gekennzeichnet durch** Erwärmen (1010) der ersten Wasserstoffmenge über eine Heizung (108) außerhalb der Vielzahl von kryogenen Tanks (100, 101, 102, 103); und
Bereitstellen (1012) der ersten Wasserstoffmenge an den ersten kryogenen Tank (100, 101, 102), sodass die erste Wasserstoffmenge den Rest des ersten Abschnitts erwärmt.

12. Verfahren gemäß Anspruch 11, das ferner das Bereitstellen einer zweiten Wasserstoffmenge des zweiten Abschnitts an eine Wasserstoffverbrauchsvorrichtung beinhaltet.

13. Verfahren gemäß Anspruch 11, wobei eine Temperatur der ersten Wasserstoffmenge nach dem Erwärmen auf einer Eigenschaft des Rests des ersten Abschnitts basiert und wobei die Eigenschaft mindestens eines von einer Temperatur, einem Druck oder einer Menge des Rests beinhalten kann.

14. Verfahren gemäß Anspruch 11, das ferner Folgendes beinhaltet:
als Reaktion darauf, dass der erste kryogene Tank (100, 101, 102) mindestens teilweise entleert ist, Beenden der Entnahme des ersten Abschnitts; und
Entnehmen einer zweiten Wasserstoffmenge des zweiten Abschnitts.

15. Verfahren gemäß Anspruch 12, das das Erwärmen der zweiten Wasserstoffmenge beinhaltet.

## Revendications

1. Un système de stockage comprenant :
une pluralité de réservoirs (100, 101, 102, 103) en communication fluidique les uns avec les autres via un collecteur, où :
un premier réservoir (100, 101, 102) de la pluralité de réservoirs est couplé fluidiquement à une vanne (105) qui commande un écoulement de flux d'hydrogène cryo-comprimé entrant et sortant du premier réservoir (100, 101, 102) ;
un deuxième réservoir (103) de la pluralité de réservoirs est en communication fluidique directe avec le collecteur ;
**caractérisé par** ce qu'un dispositif de chauffage (108) est disposé dans le collecteur de sorte que l'hydrogène peut être échangé entre le premier réservoir (100, 101, 102) et le deuxième réservoir (103) tout en étant chauffé par le dispositif de chauffage (108).

2. Le système de la revendication 1, où chaque réservoir (100, 101, 102, 103) de la pluralité de réservoirs comprend :
une paroi extérieure (8) ;
une couche de support (4) disposée à l'intérieur et espacée d'une surface intérieure de la paroi extérieure (8), où la surface intérieure de la paroi extérieure (8) et une surface extérieure de la couche de support (4) définissent un compartiment d'isolation (5) entre elles ; et
un revêtement (3) disposé à l'intérieur d'une surface intérieure de la couche de support (4), où le revêtement (3) forme un volume de stockage fermé (2).

3. Le système de n'importe lesquelles des revendications 1 à 2, où le volume de stockage fermé (2) est d'au moins 100 litres.

4. Le système de n'importe lesquelles des revendications 2 à 3, où le compartiment d'isolation (5) encapsule au moins le premier réservoir (100, 101, 102) et le deuxième réservoir (103) et, facultativement, le compartiment d'isolation (5) contient un matériau isolant comprenant une feuille métallique, de la perlite, de la fibre de verre, de la mousse, ou des fibres de silice.

5. Le système de n'importe lesquelles des revendications 2 à 4 où le compartiment d'isolation (5) comprend un vide.

6. Un système, tel que dans n'importe lesquelles des revendications précédentes, comprenant en outre un élément de traitement (1102) configuré pour commander automatiquement la vanne (105).

7. Le système de n'importe lesquelles des revendications 2 à 6, où l'isolation incluse dans la couche d'isolation (5) est configurée pour fonctionner à la pression atmosphérique.

8. Le système de n'importe lesquelles des revendications 2 à 7 où le revêtement (3) comprend du métal ou un polymère.

9. Le système de n'importe lesquelles des revendications 2 à 8, où le revêtement (3) a une épaisseur comprise entre 3 mm et 30 mm.

10. Le système de n'importe lesquelles des revendications 2 à 9, où la couche de support (4) comprend de la fibre de carbone, de l'aramide, ou du verre.

11. Un procédé de fonctionnement d'un système de stockage cryo-comprimé (900), le système (900) comprenant une pluralité de réservoirs cryogéniques (100, 101, 102, 103) conçus pour stocker une alimentation en hydrogène, le procédé comprenant :
la division de l'hydrogène en une pluralité de portions (1002) ;
le stockage de chacune des portions dans des premier (100, 101, 102) et deuxième réservoirs cryogéniques (103) respectifs de la pluralité de réservoirs cryogéniques (100, 101, 102, 103) ;
le retrait (1004) d'au moins une partie d'une première portion de la pluralité de portions du premier réservoir cryogénique (100, 101, 102) ;
en réponse (1006) au premier réservoir cryogénique (100) contenant un reste de la première portion, de sorte que le premier réservoir cryogénique (100, 101, 102) respectif est au moins partiellement appauvri, le retrait (1008) d'une première quantité d'hydrogène de la deuxième portion du deuxième réservoir cryogénique (103) ;
**caractérisé par** le chauffage (1010), par l'intermédiaire d'un dispositif de chauffage (108) externe à la pluralité de réservoirs cryogéniques (100, 101, 102, 103), de la première quantité d'hydrogène ; et
la fourniture (1012) de la première quantité d'hydrogène au premier réservoir cryogénique (100, 101, 102) de sorte que la première quantité d'hydrogène chauffe le reste de la première portion.

12. Le procédé de la revendication 11, comprenant en outre la fourniture d'une deuxième quantité d'hydrogène de la deuxième portion à un dispositif de consommation d'hydrogène.

13. Le procédé de la revendication 11, où une température de la première quantité d'hydrogène après chauffage est basée sur une caractéristique du reste de la première portion et où la caractéristique peut comprendre au moins un élément parmi une température, une pression, ou une quantité du reste.

14. Le procédé de la revendication 11, comprenant en outre :
en réponse au premier réservoir cryogénique (100, 101, 102) étant au moins partiellement appauvri, l'arrêt du retrait de la première portion ; et
le retrait d'une deuxième quantité d'hydrogène de la deuxième portion.

15. Le procédé de la revendication 12, comprenant le chauffage de la deuxième quantité d'hydrogène.
